(19) Europäisches Patentamt
European Patent Office
Office européen des brevets

(11) EP 0 763 075 B1

(12) **FASCICULE DE BREVET EUROPEEN**

(45) Date de publication et mention de la délivrance du brevet:
**22.03.2000 Bulletin 2000/12**

(21) Numéro de dépôt: **95922568.1**

(22) Date de dépôt: **06.06.1995**

(51) Int. Cl.$^7$: **C09D 7/12**, C09D 5/03, C09D 5/46

(86) Numéro de dépôt international:
**PCT/FR95/00732**

(87) Numéro de publication internationale:
**WO 95/33796 (14.12.1995 Gazette 1995/53)**

(54) **COMPOSITIONS POUR LE REVETEMENT DE SUBSTRATS D'ASPECT MAT**
ZUSAMMENSETZUNG ZUR HERSTELLUNG VON MATTIERTEN ÜBERZÜGEN
MAT-FINISH COMPOSITIONS FOR COATING SUBSTRATES

(84) Etats contractants désignés:
**AT BE CH DE DK ES FR GB IT LI NL SE**

(30) Priorité: **03.06.1994 GB 9411101**

(43) Date de publication de la demande:
**19.03.1997 Bulletin 1997/12**

(73) Titulaire: **ELF ATOCHEM S.A.**
**92800 Puteaux, Hauts-de-Seine (FR)**

(72) Inventeurs:
- **RENNIE, Stephen**
  **Winslow Bucks MK18 3AN (GB)**
- **TEDOLDI, Arnaud**
  **F-27170 Beaumont-le-Roger (FR)**
- **JUHUE, Didier**
  **F-27300 Bernay (FR)**

(56) Documents cités:
**DE-A- 3 610 757**
**FR-A- 2 204 674**
**FR-A- 1 368 801**
**US-A- 4 927 710**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 763 075 B1

## Description

DOMAINE TECHNIQUE

La présente invention concerne des compositions pour le revêtement de substrats d'aspect de surface mat.

TECHNIQUE ANTERIEURE

Les revêtements de substrats à base de polymères, par exemple à base de polyamide (PA), de polyester ou de résines époxydes sont largement employés pour revêtir des substrats métalliques. Or, de tels revêtements présentent en général une certaine brillance que l'on désire parfois éviter, par exemple pour le recouvrement de certaines pièces automobiles (pare-chocs,...) et pour certains éléments de mobilier de décor et construction dans les domaines de la décoration intérieure, de l'ameublement et du bâtiment.

Pour mater des compositions à base de polymères, on a proposé d'incorporer aux résines des substances minérales ou charges telles que le carbonate de calcium, la silice ou le talc. Pour obtenir des revêtements dont le brillant spéculaire à 60 ° est de 30 %, la quantité de charges est supérieure à 40% en poids et la composition subit alors un abaissement non négligeable de ses propriétés mécaniques ; il n'est pas possible d'obtenir une matité encore plus importante sans nuire de façon rédhibitoire aux autres propriétés des revêtements.

On a également proposé d'ajouter à ces compositions, soit des résines telles que amidine cyclique, acide polycarboxylique ou résine ionomère, soit des résines thermoplastiques telles que les polyoléfines ; mais là encore, le degré de matité est insuffisant et les propriété mécaniques se trouvent altérées ainsi que la stabilité thermique du revêtement (jaunissement).

US 4.927.710 a divulgué l'utilisation de certaines fibres acryliques de longueur inférieure à 300 µm et de rapport de forme (longueur/diamètre) inférieur à 20 comme agents matants dans les peintures.

EXPOSE DE L'INVENTION

L'invention concerne des compositions à base de résines pour le revêtement de substrats d'aspect de surface mat et dont les propriétés mécaniques sont similaires à celles des compositions non chargées. On apprécie le degré de matité d'une surface en mesurant le brillant spéculaire c'est-à-dire le rapport de l'intensité du rayonnement réfléchi par cette surface au rayonnement incident appliqué. Une surface sera considérée comme "mate" si, pour un rayonnement incident faisant un angle de 60° avec ladite surface, le rapport rayonnement réfléchi/rayonnement incident est inférieur ou égal à 30 %.

Les résines ou polymères des compositions de revêtements peuvent être des résines thermoplastiques ou des résines thermodurcissables.

- A titre d'exemple de résines thermoplastiques, on peut citer
    * les polyoléfines telles que PE, PP, leurs copolymères ou alliages
    * le PVC
    * les polyamides aliphatiques, cycloaliphatiques et/ou aromatiques, tels que les PA-11, PA-12, PA-12,12, PA-6, PA-6,6, PA-6,12, les élastomères thermoplastiques à base de polyamide, seuls, en mélange et/ou copolymérisés.
- A titre d'exemple de résines thermodurcissables, on peut citer
    * les résines époxydes, époxy/phénoliques,
    * les résines polyesters,
    * les hybrides époxy/polyester.
- Les résines acryliques et polyuréthannes qui conviennent également peuvent être soit thermoplastiques, soit thermodurcissables, comme certaines résines polyesters.

Par polyesters on entend les résines issus des réactions de condensation entre des acides mono- et polyfonctionnesl avec des anhydrides, des polyols ou des esters.

Par résines époxydes, on entend les produits issus de la chimie des diglycidyl éther du bisphénol A , encore appelés DGEBA et les produits issus de la chimie du glycidyl éther des résines Novolacs. Les résines DGEBA utilisées ont des masses moléculaires comprises en général entre 600 et 6000 g/mol.

Les compositions de revêtement selon l'invention peuvent contenir une ou plusieurs des résines énumérées ci-dessus.

Les compositions de revêtement selon l'invention peuvent contenir divers additifs et/ou charges tels que des pigments ou colorants, des agents anti-cratère, réducteur, antioxydant, etc.., des charges de renforcement :

- antioxydants comme l'iodure du cuivre combiné avec l'iodure de potassium, des dérivés de phénol et des amines encombrées,
- agents de fluidisation,
- charges renforçantes et nucléantes comme la Dolomie®, le carbonate de calcium et/ou de magnésium, le quartz, le nitrure de bore, le kaolin vendu sous la dénomination commerciale "Frantex®", la wollastonite, le dioxyde de titane, les billes de verre, le talc, le mica, vendus sous les noms "Dolomie®" (carbonate double de calcium et magnésium), "Plastorite" (mélange de quartz, mica et chlorite), "Minex®" (carbonate de calcium), le noir de carbone,
- stabilisateurs UV comme, par exemple, des dérivés de résorcine, des benzotriazoles ou des salicylates,
- agents anti-cratères, ou agents d'étalement,
- pigments comme, par exemple, le dioxyde de titane, le noir de carbone, l'oxyde de cobalt, le titanate de nickel, le bisulfure de molybdène, les paillettes d'aluminium, l'oxyde de fer, l'oxyde de zinc, des pigments organiques comme les dérivés de phtalocyanine et d'anthraquinone.

Il est possible d'incorporer aux compositions de l'invention des additifs choisis notamment parmi ceux décrits ci-dessus et dont les proportions respectives restent dans les limites habituellement rencontrées dans le domaine des compositions en poudre pour le revêtement de substrats notamment métalliques. En général, on incorpore jusqu'à 100 % en poids desdits constituants, c'est-à-dire que ces charges peuvent représenter le même poids que la quantité de résine(s).

Ces additifs peuvent être incorporés par tout moyen dans les compositions de l'invention. Les compositions ci-dessus peuvent être obtenues de façon connue par toute technique de mélangeage des constituants à l'état fondu telle que, par exemple, l'extrusion ou compoundage sur extrudeuse mono- ou double vis, sur co-malaxeur ou par toute technique continue ou discontinue , comme par exemple à l'aide d'un mélangeur interne.

Outre les constituants énumérés ci-dessus, les compositions selon l'invention contiennent un ou plusieurs agents matants qui se présentent majoritairement sous forme d'aiguilles ou paillettes de longueur moyenne comprise entre 1 et 200 µm et de préférence comprise entre 50 et 120 µm et de préférence voisine de 100 µm et de rapport de forme -i-e rapport longueur/diamètre compris entre 10 et 40.

Les agents matants selon l'invention sont l'acide dianilide téréphtalique (DAT) de formule I ainsi que ses dérivés.

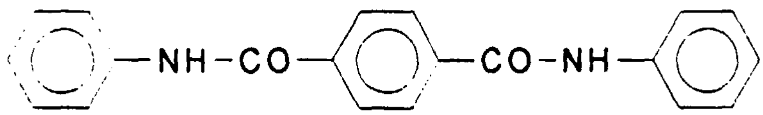

I

Les dérivés du DAT selon l'invention sont de préférence, insolubles dans l'eau. En effet, dans de nombreuses applications les revêtements issus des compositions selon l'invention sont en contact avec l'eau. Ce sont notamment les DAT dont l'un au moins des atomes d'hydrogène des cycles aromatiques est remplacé par un groupement alkyle, hydroxyle, sulfonamide et/ou un atome d'halogène.

Le DAT peut être préparé par condensation d'aniline et de chlorure d'acide téréphtalique ou par amidation d'acide téréphtalique ou d'ester dérivé d'acide téréphtalique. La poudre de DAT, une fois synthétisée est en équilibre métastable à température ambiante.

La demanderesse a constaté qu'au cours d'une montée en température, le DAT subit un changement d'état cristallin, se transformant de grains en aiguilles ou paillettes avec un rapport de forme compris entre 10 et 40. cette transition de type solide/solide se produit entre 210 et 270 °C avec un pic exothermique à 250 °C.

Les compositions selon l'invention (résine(s) + agent(s) matant(s) + additif(s)) destinées au revêtement de substrats se présentent en général sous forme de poudres dont la granulométrie peut être comprise entre 5 µm et 1 mm.

Un premier procédé d'obtention de compositions en poudre selon l'invention consiste à mélanger à sec les divers constituants de la composition. Ce mélange à sec ou dry-blend ne nécessite pas d'appareillage spécial, peut s'effectuer à température ambiante, ce qui le rend économique.

En général, la granulométrie des résines est comprise entre 20 et 200 µm. La granulométrie de l'agent matant avant incorporation dans la composition est de préférence inférieure à 20 µm et avantageusement inférieure à 5 µm.

Un second procédé d'obtention de compositions en poudre selon l'invention consiste à malaxer à l'état fondu tous les constituants dans un malaxeur de type approprié. Pour des compositions à base de résine(s) thermoplastique(s), la température de malaxage peut être comprise entre 150 et 300 °C et de préférence entre 180 et 230 °C. Pour des compositions à base de résine(s) thermodurcissable(s), la température de malaxage peut être comprise entre 80 et 140 °C et de préférence entre 90 et 120 °C. Le produit final est broyé selon les techniques habituelles, à la granulométrie souhaitée pour le revêtement. On peut aussi procéder par atomisation ou précipitation.

Les compositions selon l'invention peuvent constituer un mélange-maître ou un produit final.

Le mélange-maître qui présente l'avantage d'assurer une bonne prédispersion de la composition et peut ultérieurement être malaxé ou mélangé à sec avec de la ou des résines selon les procédés cités au-dessus.

Un troisième procédé d'obtention pour des compositions en poudre selon l'invention à base de PA consiste à effectuer une (co)polycondensation des monomères de PA en présence du ou des agents matants. A cet effet, les agents matants sont introduits dans l'autoclave en même temps que les monomères polyamides. La polymérisation est effectuée selon les procédures habituelles. On opère en général à une température comprise entre 150 et 300 °C et de préférence entre 190 et 250 °C.

Tout type d'appareil utilisé pour la polycondensation des polyamides peut être employé. On peut citer à titre d'exemple un réacteur équipé d'une agitation d'environ 50 trs/min, pouvant supporter une pression de 20 bars. La durée de polycondensation peut être comprise entre 5 et 15 heures, et de préférence entre 4 et 8 heures. Lorsque les opérations de polycondensation sont terminées, on obtient un mélange sous forme de granulés que l'on broie à la granulométrie souhaitée. On peut aussi procéder par précipitation ou atomisation.

La présente invention a également pour objet l'utilisation des compositions en poudre telles que définies précédemment pour le revêtement de substrats, notamment métalliques, ainsi que les substrats ainsi revêtus. A titre d'exemple de substrats, on peut citer les substrats métalliques ou comprenant une partie métallique, par exemple en fer, an acier ordinaire ou galvanisé, en aluminium ou alliage d'aluminium, les substrats en bois, en matières plastiques, en verre, ciment, terre cuite, et d'une manière générale les matériaux composites dont au moins un des éléments peut être choisi dans la liste précédente. Le substrat métallique peut être choisi dans une large gamme de produits. Il peut s'agir de pièces d'acier ordinaire ou galvanisé, de pièces en aluminium ou en alliage d'aluminium. L'épaisseur du substrat métallique peut être quelconque (par exemple de l'ordre du dixième de mm, comme de l'ordre de quelques dizaines de cm).

Selon une technique connue qui ne constitue pas en elle-même un objet de l'invention, le substrat métallique, et notamment en acier ordinaire, en aluminium ou en alliage d'aluminium a pu subir un ou plusieurs des traitements de surface suivants, cette liste n'étant pas limitative : dégraissage grossier, dégraissage alcalin, brossage, grenaillage ou sablage, dégraissage fin, rinçage à chaud, dégraissage phosphatant, phosphatations fer/zinc/tri-cations, chromatation, rinçage à froid, rinçage chromique.

A titre d'exemples de substrats métalliques aptes à être revêtus avec une composition selon l'invention, on peut citer : acier dégraissé, lisse ou grenaillé, acier dégraissé phosphaté, acier phosphaté fer ou zinc, acier galvanisé Sendzimir, acier électrozingué, acier galvanisé au bain, acier cataphorèse, acier chromaté, acier anodisé, acier sablé corindon, aluminium dégraissé, aluminium lisse ou grenaillé, aluminium chromaté.

La composition à base de résine selon l'invention est donc appliquée sous forme de poudre sur le substrat. L'application de la composition en poudre peut s'effectuer selon les techniques d'application habituellement mises en oeuvre. Le broyage des poudres peut s'effectuer dans des appareils refroidis cryogéniquement ou à forte absorption d'air (broyeurs à couteaux, à marteaux, à disques...). Les particules de poudre obtenues sont sélectées dans des appareils appropriés pour éliminer des tranches granulométriques non souhaitées : par exemple, des grains trop gros et/ou trop fins.

Parmi les techniques d'application en poudre, on peut citer la projection électrostatique, le trempage en lit fluidisé, le lit fluidisé électrostatique (par exemple, celui décrit dans les brevets DD 277 395 et DD 251 510), techniques préférées pour réaliser le revêtement des substrats selon l'invention.

En projection électrostatique, la poudre est introduite dans un pistolet où elle est véhiculée par de l'air comprimé et passe dans une buse portée à un potentiel élevé généralement compris entre une dizaine et une centaine de kV. La tension appliquée peut être de polarité positive ou négative. Le débit de poudre dans le pistolet est généralement compris entre 10 et 200 g/min, et de préférence entre 50 et 120 g/min. Lors de son passage dans la buse, la poudre se charge électrostatiquement. Les particules de poudre véhiculées par l'air comprimé viennent s'appliquer sur la surface métallique à revêtir, ladite surface étant elle-même reliée à la terre, c'est-à-dire à un potentiel électrique nul. Les particules de poudre sont retenues sur celle surface par leur charge électrostatique. Ces forces sont suffisantes pour que l'objet poudré puisse être revêtu et déplacé puis chauffé dans un four à une température qui provoque la fusion de la poudre.

La projection électrostatique des compositions à base de polyamide selon l'invention quelle que soit la polarité

d'application présente un avantage certain car on pourra notamment utiliser les installations industrielles standard existantes qui sont conçues pour la projection électrostatique de revêtements en poudre en une seule polarité, dans ce cas, le substrat métallique subit une préparation de surface.

En général, on peut utiliser une poudre de granulométrie moyenne comprise entre 5 et 100 µm et de préférence entre 20 et 80 µm. L'épaisseur du revêtement est de préférence comprise entre 80 et 140 µm.

Dans le cas du procédé de trempage en lit fluidisé, le substrat métallique à revêtir, soigneusement préparé, en subissant par exemple un ou plusieurs traitements de surface énumérés ci-dessus, est chauffé dans un four à une température déterminée suivant notamment la nature dudit substrat, sa forme, son épaisseur et l'épaisseur de revêtement désirée. Le substrat ainsi chauffé est ensuite plongé dans une composition de poudre selon l'invention maintenue en suspension par un gaz en circulation dans une cuve à fond poreux. La poudre fond au contact des surfaces chaudes et forme ainsi un dépôt dont l'épaisseur est fonction de la température du substrat et de se durée d'immersion dans la poudre.

La granulométrie des poudres mises en oeuvre en lit fluidisé peut être comprise entre 10 et 1000 µm et de préférence, entre 40 et 160 µm. En général, l'épaisseur du revêtement peut être comprise entre 150 et 1 000 µm, et de préférence entre 350 et 450 µm.

On ne sortirait pas du cadre de l'invention en appliquant sur le substrat dégraissé un primaire d'adhérence sous forme liquide ou pulvérulente avant d'appliquer les poudres de l'invention.

La présente invention concerne aussi un matériau composite comprenant un substrat et comprenant un revêtement formé des compositions en poudre de l'invention. L'invention concerne aussi le matériau précédent, la couche de poudre ayant été fondue pour former un revêtement mat.

MANIERES DE REALISER L'INVENTION

Synthèse du DAT

A température ambiante inférieure à 35°C, on dissout 93 g d'aniline et 106 g de carbonate de sodium dans 4 l d'eau. on dissout par ailleurs 101,5 g de chlorure d'acide téréphtalique dans 0,25 l de chlorure de méthylène. On mélange alors les 2 solutions et les agite vigoureusement. Un précipité blanc apparaît. Le mélange est ensuite lavé et filtré et le précipité est séché. On obtient une poudre blanche de granulométrie moyenne d'environ 10 µm que l'on désagglomère par broyage jusqu'à la granulométrie moyenne de 5µm. La température de fusion de la poudre (DAT) est 335 °C et se température de modification cristalline est 220 °C. Le DAT obtenu est utilisé ci-dessus est utilisé dans les essais suivants.

Dans tout ce qui suit,

* les proportions des divers constituants sont pondérales, sauf indicatiion contraire
* PA-11 désigne un polyamide 11 de masse molaire $\overline{Mn}$ avant application comprise entre 9.000 et 15.000 de granulométrie inférieure à 100 µm et de diamètre moyen égal à environ 30 µm pour application électrostatique et de granulométrie inférieure à 400 µm et de diamètre moyen égal à environ 100 µm pour application trempage.
* DAT: acide téréphtalique dianilide
* mélange dry-blend : mélange par dispersion à sec de matières pulvérulentes dans un disperseur rapide du type Henschel®
* mélange par extrusion : mélange à l'état fondu à l'aide d'une extrudeuse
* viscosité inhérente : viscosité en solution à 20 °C pour 0,5 g de polymère dans 50 ml de métacrésol ; la viscosité inhérente des PA-11 pour application électrostatique est comprise entre 0,8 et 1,0 ; la viscosité inhérente des PA-11 pour trempage est comprise entre 0,9 et 1,1
* ‰ : proportion exprimée par rapport à la résine de base ou au mélange (résine + additif(s)) mentionné(e) précédemment

**Exemple 1 Mélange à sec à base de PA-11 pur ou naturel (sans charges et sans pigments)/Poudre pour application électrostatique**

A.Composition du revêtement

Dans un mélangeur rapide de type Henschel®, on charge 1,5 kg de poudre PA-11, et 75 g de DAT (50‰). On brasse le mélange 100 s à une vitesse de 1800 trs/min. La poudre obtenue est mise en oeuvre telle quelle.

Le PA-11 naturel contient environ 2% en masse d'additifs d'étalement et d'antioxydant et 30‰ d'agent d'autoapplicabilité décrit dans le brevet EP412.888(résine époxy/sulfonamide).

B. Application

La poudre obtenue précédemment est déposée à température ambiante par projection électrostatique sur une plaque d'acier qui a préalablement subi un dégraissage suivi d'un traitement de surface mécanique (grenaillage). La plaque revêtue de poudre passe ensuite dans un four ventilé de vitesse d'air comprise entre 1 et 5 m/s maintenu à 220°C où elle séjourne 10 min puis est retirée du four et refroidie librement à l'air.

C. Evaluation

On mesure le brillant spéculaire du film ansi obtenu, d'épaisseur comprise entre 80 et 150 µm, à l'aide d'un brillancemètre sous un angle de 60°.

Le tableau 1 indique les mesures de brillance d'un film obtenu à partir de la composition décrite de l'exemple 1.A et d'un film obtenu à partir d'une formulation identique sans DAT.

Tableau 1

| | Poudre sans DAT | Poudre Ex 1 |
|---|---|---|
| Brillance à 60° | 44,5% | 7,2% |
| Ecart type | 2,2 | 0,3 |

**Exemple 2 Mélange par extrusion à base de PA-11 pur/Poudre pour application électrostatique**

A.Composition du revêtement

Un prémélange de PA-11 naturel, d'antioxydant, d'agent d'étalement et de DAT en concentration 60‰ est réalisé dans un disperseur du type Henschel®. L'ensemble homogénéisé est alors introduit dans une extrudeuse à une température de consigne comprise entre 190 et 220°C et avec un temps de séjour matière de l'ordre de 30 s. En sortie d'extrudeuse, le produit ainsi obtenu est refroidi puis broyé de manière à obtenir une poudre de granulométrie inférieure à 100 µm et de diamètre moyen égal à 30 µm. A cette poudre est ajouté en dry blend 30‰ d'agent d'autoapplicabilité décrit dans le brevet EP412.888(résine époxy/sulfonamide).

B. Application

La poudre obtenue en 2.A est déposée par projection électrostatique sur une plaque d'acier dans les mêmes conditions que celles décrites en 1.B.

C. Evaluation

On mesure le brillant spéculaire du film ansi obtenu, d'épaisseur comprise entre 80 et 150 µm, à l'aide d'un brillancemètre sous un angle de 60°.

Le tableau 2 indique les mesures de brillance d'un film obtenu à partir de la composition décrite en 2.A et d'un film obtenu à partir d'une formulation identique sans l'additif DAT.

Tableau 2

| | Poudre sans DAT | Poudre Ex 2.A |
|---|---|---|
| Brillance à 60° | 70,5% | 20,2% |
| Ecart type | 0,7 | 0,4 |

**Exemple 3 Mélanges à sec à base de PA-11 noir/Poudres pour application électrostatique**

A.Composition des revêtements

Un prémélange constitué de 910 parties en poids de PA-11 naturel, de 90 parties en poids de charge minérale à base de silice et de carbonate de calcium, de 5 parties en poids de noir de carbone, de 12 parties en poids d'antioxydant est réalisé dans un disperseur du type Henschel®. L'ensemble homogénéisé est alors introduit dans une extrudeuse à une température de consigne comprise entre 190 et 220°C et un temps de séjour matière de l'ordre de 30 s. En sortie d'extrudeuse, le produit ainsi obtenu est refroidi puis broyé pour atteindre une poudre de granulométrie inférieure à 100 µm et de diamètre moyen égal à 30 µm (PA-11 noir).

Dans un mélangeur rapide de type Henschel®, on charge 1,5 kg de poudre PA-11 noir décrit précédemment, 30‰ d'agent d'autoapplicabilité décrit dans le brevet EP412.888(résine époxy/sulfonamide) et plusieurs concentrations de DAT. On brasse les mélanges pendant 100 s à la vitesse de 1800 trs/min.

B. Application

Les poudres obtenues en 3.A sont déposées par projection électrostatique sur une plaque d'acier dans les mêmes conditions que celles décrites en 1.B.

C. Evaluation

On mesure le brillant spéculaire des films ansi obtenus, d'épaisseur comprise entre 80 et 150 µm, à l'aide d'un brillancemètre sous un angle de 60°.

Le tableau 3 indique les mesures de brillance des films obtenus à partir des compositions décrites de l'exemple 3.A et d'un film obtenu à partir d'une formulation identique.

Tableau 3

| ‰ de DAT | 0 | 40 | 50 | 60 |
|---|---|---|---|---|
| Brillance à 60° | 73,5% | 43,6% | 25,2% | 17,1% |
| Ecart type | 0,5 | 0,7 | 0,8 | 0,3 |

**Exemple 4 Mélange par extrusion à base de PA-11 noir/Poudre pour application électrostatique**

A.Composition du revêtement

Un prémélange constitué de 910 parties en poids de • PA-11 naturel, de 90 parties en poids de charge minérale à base de silice et de carbonate de calcium, de 5 parties en poids de noir de carbone, de 12 parties en poids d'antioxydant et d'agent d'étalement et de 60 parties en poids de DAT est réalisé dans un disperseur du type Henschel®. L'ensemble homogénéisé est alors introduit dans une extrudeuse à une température de consigne comprise entre 190 et 220°C et avec un temps de séjour matière de l'ordre de 30 secondes. En sortie de l'extrudeuse, le produit ainsi obtenu est refroidi puis broyé pour atteindre une poudre de granulométrie inférieure à 100 µm et de diamètre moyen égal à 30 µm(PA-11 noir 4).

Cette poudre contient également 30‰ d'agent d'autoapplicabilité décrit dans le brevet EP412.888(résine époxy/sulfonamide).

B. Application

La poudre obtenue en 4.A est déposée par projection électrostatique sur une plaque d'acier dans les mêmes conditions que celles décrites en 1.B.

C. Evaluation

On mesure le brillant spéculaire du film ansi obtenu, d'épaisseur comprise entre 80 et 150 µm, à l'aide d'un brillancemètre sous un angle de 60°.

Le tableau 4 indique les mesures de brillance d'un film obtenu à partir de la composition décrite en 4.A et d'un film obtenu à partir d'une formulation identique sans l'additif DAT.

Tableau 4

| | Poudre sans DAT | PA-11 noir 4 |
|---|---|---|
| Brillance à 60° | 71,1% | 1,5% |
| Ecart type | 0,6 | 0,1 |

**Exemple 5 Mélange à sec à base de PA-11 noir/Poudres pour application électrostatique**

A.Composition des revêtements

Un prémélange constitué de 58% en poids de PA-11 naturel, de 39,5% de charge minérale à base de carbonate de calcium, de 0,5% de noir de carbone, de 2% d'antioxydant et d'agent d'étalement est réalisé dans un disperseur du type Henschel®. L'ensemble homogénéisé est alors introduit dans une extrudeuse à une température de consigne comprise entre 190 et 220°C et avec un temps de séjour matière de l'ordre de 30 s. En sortie d'extrudeuse, le produit ainsi obtenu est refroidi puis broyé pour atteindre une poudre de granulométrie inférieure à 100 µm et de diamètre moyen égal à 30 µm(PA-11 noir 5).

Dans un mélangeur rapide de type Henschel®, on charge la poudre PA-11 noir 5 et plusieurs concentrations de DAT. On brasse les mélanges pendant 100 s à une vitesse de 1800 trs/min. Ces poudres contiennet 30‰ d'agent d'autoapplicabilité décrit dans le brevet EP412.888(résine époxy/sulfonamide).

B. Application

Les poudres obtenues en 5.A sont déposées par projection électrostatique sur une plaque d'acier dans les mêmes conditions que celles décrites en 1.B.

C. Evaluation

On mesure le brillant spéculaire des films ansi obtenus, d'épaisseur comprise entre 80 et 150 µm, à l'aide d'un brillancemètre sous un angle de 60°.

Le tableau 5 indique les mesures de brillance des films obtenus à partir des compositions décrites de l'exemple 5.A et d'un film obtenu à partir d'une formulation identique sans DAT.

Tableau 5

| ‰ de DAT | 0 | 40 | 50 | 60 |
|---|---|---|---|---|
| Brillance à 60° | 40,2% | 15,6% | 8,8% | 5,1% |
| Ecart type | 0,6 | 0,4 | 0,2 | 0,1 |

**Exemple 6 Mélanges à sec à base de PA-11 noir/Poudres pour application électrostatique**

A.Composition des revêtements

Un prémélange constitué de 78% en poids de PA-11 naturel, de 19,5% de charge minérale à base de carbonate de calcium, de 0,5% de noir de carbone, de 2% d'antioxydant et d'agent d'étalement est réalisé dans un disperseur du type Henschel®. L'ensemble homogénéisé est alors introduit dans une extrudeuse à une température de consigne comprise entre 190 et 220°C et avec un temps de séjour matière de l'ordre de 30 s. En sortie d'extrudeuse, le produit ainsi obtenu est refroidi puis broyé pour atteindre une poudre de granulométrie inférieure à 100 µm et de diamètre moyen égal à 30 µm(PA-11 noir 6).

Dans un mélangeur rapide de type Henschel®, on charge le PA-11 noir 6 et plusieurs concentrations de DAT.

On brasse les mélanges 100 s à une vitesse de 1800 trs/min. Ces poudres contiennent 30‰ d'agent d'autoapplicabilité décrit dans le brevet EP412.888(résine époxy/sulfonamide).

B. Application

Les poudres obtenues en 6.A sont déposées par projection électrostatique sur une plaque d'acier dans les mêmes conditions que celles décrites en 1.B.

C. Evaluation

On mesure le brillant spéculaire des films ansi obtenus, d'épaisseur comprise entre 80 et 150 µm, à l'aide d'un brillancemètre sous un angle de 60°.

Le tableau 6 indique les mesures de brillance des films obtenus à partir des compositions décrites de l'exemple 6.A et d'un film obtenu à partir d'une formulation identique.

Tableau 6

| ‰ de DAT | 0 | 30 | 35 | 40 |
|---|---|---|---|---|
| Brillance à 60° | 58,3% | 31,8% | 25,3% | 12,2% |
| Ecart type | 1,0 | 0,6 | 0,5 | 0,2 |

**Exemple 7 Mélanges à sec à base de PA-11 gris/Poudres pour application électrostatique**

A.Composition du revêtement

Un prémélange constitué de 87% en poids de PA-11 naturel, de 9,7% de pigment blanc, de 1,8% de noir de carbone et de pigment bleu à base de cobalt, de 1,5% d'antioxydant et d'agent d'étalement est réalisé dans un disperseur du type Henschel®. L'ensemble homogénéisé est alors introduit dans une extrudeuse à une température de consigne comprise entre 190 et 220°C et avec un temps de séjour matière de l'ordre de 30 s. En sortie d'extrudeuse, le produit ainsi obtenu est refroidi puis broyé pour atteindre une poudre de granulométrie inférieure à 100 µm et de diamètre moyen égal à 30 µm (PA-11 gris 7).

Dans un mélangeur rapide de type Henschel®, on charge le PA-11 gris 7 et 50‰ de DAT. On brasse le mélange 100 s à une vitesse de 1800 trs/min.

Cette poudre contient également 30‰ d'agent d'autoapplicabilité décrit dans le brevet EP412.888(résine époxy/sulfonamide).

B. Application

La poudre obtenue en 7.A est déposée par projection électrostatique sur une plaque d'acier dans les mêmes conditions que celles décrites en 1.B.

C. Evaluation

On mesure le brillant spéculaire du film ansi obtenu, d'épaisseur comprise entre 80 et 150 µm, à l'aide d'un brillancemètre sous un angle de 60°.

Le tableau 7 indique les mesures de brillance d'un film obtenu à partir de la composition décrite en 7.A et d'un film obtenu à partir d'une formulation identique sans l'additif DAT.

Tableau 7

| | Poudre sans DAT | Poudre Ex 7.A |
|---|---|---|
| Brillance à 60° | 80,3% | 5,2% |

Tableau 7 (suite)

| | Poudre sans DAT | Poudre Ex 7.A |
|---|---|---|
| Ecart type | 2,0 | 0,2 |

**<u>Exemple 8</u> Mélanges à sec à base de PA-11 blanc/Poudres pour application électrostatique**

A.Composition des revêtements

Un prémélange constitué de 69% de PA-11 naturel, de 29,2% de pigment blanc, de 1,8% d'antioxydant et d'agent d'étalement est réalisé dans un disperseur du type Henschel®. L'ensemble homogénéisé est alors introduit dans une extrudeuse à une température de consigne comprise entre 190 et 220°C et avec un temps de séjour matière de l'ordre de 30 s. En sortie d'extrudeuse, le produit ainsi obtenu est refroidi puis broyé à une granulométrie inférieure à 100 µm et de diamètre moyen égal à 30 µm(PA-11 blanc 8).

Dans un mélangeur rapide de type Henschel®, on charge le PA-11 blanc 8 décrit précédemment et plusieurs concentrations de DAT. On brasse les mélanges pendant 100 s à une vitesse de 1800 trs/min.

La poudre contient 30‰ d'agent d'autoapplicabilité décrit dans le brevet EP412.888(résine époxy/sulfonamide).

B. Application

Les poudres obtenues en 8.A sont déposées par projection électrostatique sur une plaque d'acier dans les mêmes conditions que celles décrites en 1.B.

C. Evaluation

On mesure le brillant spéculaire des films ansi obtenus, d'épaisseur comprise entre 80 et 150 µm, à l'aide d'un brillancemètre sous un angle de 60°.

Le tableau 8 indique les mesures de brillance des films obtenus à partir des compositions décrites de l'exemple 8.A et d'un film obtenu à partir d'une formulation identique sans DAT.

Tableau 8

| ‰ de DAT | 0 | 30 | 35 | 40 |
|---|---|---|---|---|
| Brillance à 60° | 50,3% | 22,3% | 13,2% | 7,0% |
| Ecart type | 1,8 | 0,9 | 0,5 | 0,1 |

**<u>Exemple 9</u> Mélanges par extrusion à base de PA-11 blanc/Poudres pour application électrostatique**

A.Composition des revêtements

2 prémélanges constitués de 69% de PA-11 naturel, de 29,2% de pigment blanc, de 1,8% d'antioxydant et d'agent d'étalement et de respectivement 2,9% et 5,7% par rapport à ce mélange de DAT sont réalisés dans un disperseur du type Henschel®. Une fois homogénéisés, ils sont introduits dans une extrudeuse à une température de consigne comprise entre 190 et 220°C et avec un temps de séjour matière de l'ordre de 30 s. En sortie d'extrudeuse, les produits obtenus sont refroidis puis broyés pour atteindre une poudre de granulométrie inférieure à 100 µm et de diamètre moyen égal à 30 µm. Ces poudres contiennent 30‰ d'agent d'autoapplicabilité décrit dans le brevet EP412.888(résine époxy/sulfonamide).

B. Application

Les poudres obtenues en 9.A sont déposées par projection électrostatique sur une plaque d'acier dans les mêmes conditions que celles décrites en 1.B.

C. Evaluation

On mesure le brillant spéculaire des films ansi obtenus, d'épaisseur comprise entre 80 et 150 μm, à l'aide d'un brillancemètre sous un angle de 60°.
Le tableau 9 indique les mesures de brillance des films obtenus à partir des compositions décrites de l'exemple 9.A et d'un film obtenu à partir d'une formulation identique sans DAT.

Tableau 9

| % DAT | 0 | 2,9 | 5,7 |
|---|---|---|---|
| Brillance à 60° | 50,3% | 24,1% | 17,6% |
| Ecart type | 1.8 | 1,1 | 1,2 |

**Exemple 10 Mélanges par extrusion à base de PA-11 noir/Poudres pour application trempage en lit fluidisé**

A.Composition des revêtements

2 prémélanges constitués de 910 parties en poids de PA-11 naturel, de 90 parties en poids de charge minérale à base de silice et de carbonate de calcium, de 5 parties en poids de noir de carbonne, de 12 parties en poids d'antioxydant et d'agent d'étalement et de respectivement 60 et 100 parties en poids de DAT sont réalisés dans un disperseur du type Henschel®. Une fois homogénéisés ils sont extrudés dans les conditions indiquées en 9.A. En sortie de l'extrudeuse, les produits obtenus sont refroidis puis broyés pour atteindre une poudre de granulométrie inférieure à 400 μm et de diamètre moyen égal à 100 μm.

B. Application

Les poudres ainsi préparées sont placés dans une cuve de fluidisation constituée d'un fond poreux au travers duquel est distribué l'air d'alimentation assurant le mélange air / poudre. Les substrats métalliques à revêtir sont constitués de plaques d'acier qui ont préalablement subi un dégraissage suivi d'un traitement de surface mécanique (grenaillage). Ces plaques sont placées dans une four ventilé de vitesse d'air comprise entre 3 et 6 m/s à une température de 330°C pendant une durée qui est fonction de l'épaisseur de l'acier constitutif des plaques à revêtir.
A la sortie du four, les plaques sont immergées dans la poudre fluidisée pendant 2 à 15 s de manière à ce que l'épaisseur de film déposé soit comprise entre 250 et 500 μm.

C. Evaluation

On mesure le brillant spéculaire des films ansi obtenus, d'épaisseur comprise entre 250 et 500 μm, à l'aide d'un brillancemètre sous un angle de 60°.
Le tableau 10 indique les mesures de brillance des films obtenus à partir des compositions décrites de l'exemple 10.A et d'un film obtenu à partir d'une formulation identique sans DAT.

Tableau 10

| % DAT | 0 | 5,6 | 8,9 |
|---|---|---|---|
| Brillance à 60° | 63,1% | 14,3% | 8,7% |
| Ecart type | 0,5 | 0,2 | 0,1 |

**Exemple 11 Mélanges à sec à base de PA-11 noir/Poudres pour application trempage en lit fluidisé**

A.Composition des revêtements

Un prémélange constitué de 98,5% de PA-11 naturel, de 0,5% de noir de carbone, de 1% d'antioxydant et

d'agent d'étalement est réalisé dans un disperseur du type Henschel®. L'ensemble homogénéisé est alors introduit dans une extrudeuse à une température de consigne comprise entre 190 et 220°C et avec un temps de séjour matière de l'ordre de 30 s. En sortie d'extrudeuse, le produit ainsi obtenu est refroidi puis broyé pour atteindre une poudre de granulométrie inférieure à 400 µm et de diamètre moyen égal à 100 µm(PA-11 noir 11).

Dans un mélangeur rapide de type Henschel®, on charge le PA-11 noir 11 décrit précédemment avec respectivement 20, 30, 40% de DAT. On brasse les mélanges 100 s à une vitesse de 900 trs/m.

B. Application

On revêt des plaques d'acier à l'aide des poudres préparées en 11.A dans les conditions décrites en 10.B.

C. Evaluation

On mesure le brillant spéculaire des films ainsi obtenus, d'épaisseur comprise entre 250 et 500 µm, à l'aide d'un brillancemètre sous un angle de 60°.

Le tableau 11 indique les mesures de brillance des films obtenus à partir des compositions décrites en 11.A et d'un film obtenu à partir d'une formulation identique sans DAT.

Tableau 11

| ‰ de DAT | 0 | 20 | 30 | 40 |
|---|---|---|---|---|
| Brillance à 60° | 64,3% | 56,8% | 9,2% | 4,0% |
| Ecart type | 1,8 | 2,0 | 0,2 | 0,1 |

**Exemple 12 Mélange à sec à base de PA-11 noir/Poudre pour application trempage en lit fluidisé**

A.Composition du revêtement

Dans un mélangeur rapide de type Henschel®, on charge 1 kg de poudre PA-11 naturel, 6 g de noir de carbone et 30 g de DAT. On brasse le mélange 100 s à une vitesse de 900 trs/min. La poudre obtenue est mise en oeuvre telle quelle. Le PA-11 naturel contient environ 1% d'additifs d'étalement et d'antioxidant.

B. Application

On revêt une plaque d'acier à l'aide de la poudre préparée en 12.A dans les conditions décrites en 10.B.

C. Evaluation

On mesure le brillant spéculaire du film ainsi obtenu, d'épaisseur comprise entre 250 et 500 µm, à l'aide d'un brillancemètre sous un angle de 60°.

Le tableau 12 indique les mesures de brillance du film obtenu à partir de la composition décrite en 12.A et d'un film obtenu à partir d'une formulation identique sans DAT.

Tableau 12

| ‰ de DAT | 0 | 30 |
|---|---|---|
| Brillance à 60° | 34,8% | 9,3% |
| Ecart type | 1,1 | 0,3 |

**Exemple 13 Mélanges à sec à base de PA-11 gris/Poudres pour application trempage en lit fluidisé**

A.Composition des revêtements

Un prémélange constitué de 87,3% de PA-11 naturel, de 9,7% de pigment blanc, de 1,8% de noir de carbone et de pigment bleu à base de cobalt, de 1,2% d'antioxydant et d'agent d'étalement est dispersé, homogénéisé,extrudé puis broyé dans les conditions indiquées en 11.A (PA-11 gris13).

Dans un mélangeur rapide de type Henschel®, on charge 1kg de PA-11 gris 13 et respectivement 25 et 30‰ de DAT. On brasse les mélanges 100 s à une vitesse de 900 trs/min.

B. Application

On revêt des plaques d'acier à l'aide des poudres préparées en 11.A dans les conditions décrites en 10.B.

C. Evaluation

On mesure le brillant spéculaire des films ainsi obtenus, d'épaisseur comprise entre 250 et 500 µm, à l'aide d'un brillancemètre sous un angle de 60°.

Le tableau 13 indique les mesures de brillance des films obtenus à partir des compositions décrites en 13.A et d'un film obtenu à partir d'une formulation identique sans DAT.

Tableau 13

| ‰ de DAT | 0 | 25 | 30 |
|---|---|---|---|
| Brillance à 60° | 79,4% | 36,7% | 15,5% |
| Ecart type | 2,1 | 1,4 | 0,8 |

**Exemple 14 Mélanges par extrusion à base de PA-11 blanc/Poudres pour application trempage en lit fluidisé**

A.Composition des revêtements

2 prémélanges constitué de 69% de PA-11 naturel, de 29% de pigment blanc, de 2% d'antioxydant et d'agent d'étalement et de respectivement 2,9% et 5,6% en poids de DAT par rapport au mélange des constituants précédents sont réalisés dans un disperseur du type Henschel®. Chacun des mélanges, une fois homogénéisé, est introduit dans une extrudeuse à une température de consigne comprise entre 190 et 220°C et avec un temps de séjour matière de l'ordre de 30 s. En sortie d'extrudeuse, les produits ainsi obtenus sont refroidis puis broyés pour obtenir une poudre de granulométrie inférieure à 400 µm et de diamètre moyen égal à 100 µm.

B. Application

On revêt des plaques d'acier à l'aide des poudres préparées en 11.A dans les conditions décrites en 10.B.

C. Evaluation

On mesure le brillant spéculaire des films ainsi obtenus, d'épaisseur comprise entre 250 et 500 µm, à l'aide d'un brillancemètre sous un angle de 60°.

Le tableau 14 indique les mesures de brillance des films obtenus à partir des compositions décrites en 14.A et d'un film obtenu à partir d'une formulation identique sans DAT.

Tableau 14

| % de DAT | 0 | 2,9 | 5,6 |
|---|---|---|---|
| Brillance à 60° | 39,6% | 17,3% | 5,3% |

Tableau 14 (suite)

| | | | |
|---|---|---|---|
| Ecart type | 0,9 | 0,1 | 0,1 |

**Exemple 15 Mélange à sec à base de PA-12 blanc/Poudre pour application trempage en lit fluidisé**

A.Composition du revêtement

Un PA-12 formulé avec 0,7% en poids d'antioxydant et contenant 6,4%de charges (constituées de 84% en poids de dioxyde de titane, 2% de silice, 6% de phosphore et 8 % d'aluminium) de granulométrie inférieure à 500 µm, de diamètre moyen proche de 100 µm et de viscosité inhérente égale 1,01 vendu sous la dénomination commerciale VESTOSINT® WEISS K 1011 de la société HÜLS est placé dans un disperseur du type Henschel®. On ajoute 25‰ de DAT. L'ensemble est homogénéisé pendant 100 s avec une vitesse de dispersion de 900 trs/min.

B. Application

On revêt une plaque d'acier à l'aide de la poudre préparée en 15.A dans les conditions décrites en 10.B.

C. Evaluation

On mesure le brillant spéculaire du film ainsi obtenu, d'épaisseur comprise entre 250 et 500 µm, à l'aide d'un brillancemètre sous un angle de 60°.

Le tableau 15 indique les mesures de brillance du film obtenu à partir de la composition décrite en 15.A et d'un film obtenu à partir d'une formulation identique sans DAT.

Tableau 15

| ‰ de DAT | 0 | 25 |
|---|---|---|
| Brillance à 60° | 19,9% | 9,4% |
| Ecart type | 1,0 | 0,5 |

**Exemple 16 Mélange à sec à base de PA-12 gris/Poudre pour application trempage on lit fluidisé**

A.Composition du revêtement

Dans un mélangeur rapide de type Henschel®, on charge 1 kg de poudre PA-12 gris vendue sous la dénomination commerciale VESTOSINT® NYLON 12 HUELS ESF GRAU 9.7195 et 50‰ de DAT. On brasse le mélange 100 s à une vitesse de 1800 trs/min.

B. Application

On revêt une plaque d'acier à l'aide de la poudre préparée en 16.A dans les conditions décrites en 10.B.

C. Evaluation

On mesure le brillant spéculaire du film ainsi obtenu, d'épaisseur comprise entre 250 et 500 µm, à l'aide d'un brillancemètre sous un angle de 60°.

Le tableau 16 indique les mesures de brillance du film obtenu à partir de la composition décrite en 16.A et d'un film obtenu à partir d'une formulation identique sans DAT.

Tableau 16

| ‰ de DAT | 0 | 50 |
|---|---|---|

Tableau 16 (suite)

| | | |
|---|---|---|
| Brillance à 60° | 20,2% | 9,9% |
| Ecart type | 0,3 | 0,2 |

**<u>Exemple 17</u> Mélange à sec à base de copolymère éthylène/acide acrylique/Poudre pour application trempage on lit fluidisé**

<u>A.Composition du revêtement</u>

Une poudre noire constituée d'un polymère thermoplastique à base de copolymère éthylène/acide acrylique et de point de fusion égale à 96°C commercialisé sous la référence PLASTCOAT® PPA 571 est placée dans un disperseur Henschel® en mélange avec 10‰ de DAT. L'ensemble est homogénéisé pendant 100 s avec une vitesse de dispersion égale à 900 trs/m.

<u>B. Application</u>

La poudre ainsi préparée est mise dans une cuve de fluidisation constituée d'un fond poreux au travers duquel est distribué l'air d'alimentation assurant le mélange air / poudre. Les substrats métalliques sont constitués de plaques d'acier qui ont préalablement subi un dégraissage suivi d'un traitement de surface mécanique (grenaillage). Ces plaques sont placées dans un four ventilé de vitesse d'air comprise entre 3 et 6 mètres par seconde à une température de 300°C pendant une durée adaptable en fonction de l'épaisseur de l'acier constitutif des plaques à revêtir

A la sortie du four, les plaques sont immergées dans la poudre fluidisée pendant une durée comprise entre 2 et 15 s de manière à atteindre une épaisseur de film déposé comprise entre 250 et 500 µm.

<u>C. Evaluation</u>

On mesure le brillant spéculaire des films ainsi obtenus, d'épaisseur comprise entre 250 et 500 µm, à l'aide d'un brillancemètre sous un angle de 60°.

Le tableau 17 indique les mesures de brillance des films obtenus à partir de la composition décrite en 17.A et d'un film obtenu à partir d'une formulation identique sans DAT.

Tableau 17

| ‰ de DAT | 0 | 10 |
|---|---|---|
| Brillance à 60° | 75,2% | 31,8% |
| Ecart type | 3,1 | 1,3 |

**<u>Exemple 18</u> Mélange à sec à base de résine époxy naturelle/Poudre pour application électrostatique**

<u>A.Composition du revêtement</u>

Dans un mélangeur rapide de type Henschel®, on charge 1 kg de poudre époxy (DGEBA) naturel de poids équivalent d'époxy (EEW) égale à 895 g et de granulométrie inférieure à 100 µm avec un diamètre moyen égal à 35 µm, 50‰ d'agent réticulant constitué de dicyandiamide et 50‰ de DAT. On brasse le mélange 100 s à une vitesse de 1800 trs/min.

<u>B. Application</u>

La poudre obtenue en 18.A est déposée à température ambiante par projection électrostatique sur plaques d'acier qui ont préalablement subi un dégraissage suivi d'un traitement de surface mécanique (grenaillage). La plaque ainsi revêtue passe ensuite dans un four ventilé de vitesse d'air comprise entre 1 et 5 m/s maintenu à 200°C où elle séjourne 10 min puis est retirée du four et refroidie librement à l'air.

C. Evaluation

On mesure le brillant spéculaire des films ainsi obtenus, d'épaisseur comprise entre 40 et 120 µm, à l'aide d'un brillancemètre sous un angle de 60°.
Le tableau 18 indique les mesures de brillance des films obtenus à partir de la composition décrite en 18.A et d'un film obtenu à partir d'une formulation identique sans DAT.

Tableau 18

| ‰ de DAT | 0 | 50 |
|---|---|---|
| Brillance à 60° | 89,2% | 39,4% |
| Ecart type | 4,4 | 0,7 |

**Exemple 19 Mélange à sec à base de résine époxy blanche/Poudre pour application électrostatique**

A.Composition du revêtement

Un prémélange constitué de 1000 parties de résine époxy (DGEBA) naturel de poids équivalent d'époxy égale à 750 g (EEW), de 45 parties d'agent réticulant à base de dicyandiamide accéléré, de 350 parties de dioxyde de titane, de 5 parties de benzoïne, de 6 parties d'agent d'étalement est réalisé dans un disperseur Henschel®.
L'ensemble homogénéisé est alors introduit dans une extrudeuse à une température de consigne comprise entre 90 et 120°C et avec un temps de séjour matière de l'ordre de 40 s. En sortie de l'extrudeuse, le produit ainsi obtenu est refroidi puis broyé pour atteindre une poudre de granulométrie inférieure à 100 µm et de diamètre moyen égal à 30 µm.
Dans un mélangeur rapide de type Henschel®, on charge 1 kg de la poudre époxy blanc décrite précédemment et 50‰ de DAT. On brasse le mélange 100 s à une vitesse de 1800 trs/min.

B. Application

La poudre obtenue en 19.A est déposée à température ambiante par projection électrostatique sur des plaques d'acier qui ont préalablement subi un dégraissage suivi d'un traitement de surface mécanique (grenaillage).Les plaque ainsi revêtues passent ensuite dans un four ventilé de vitesse d'air comprise entre 1 et 5 m/s maintenu à 200°C où il séjourne 10 min puis est retiré du four et refroidit librement à l'air.

C. Evaluation

On mesure le brillant spéculaire des films ainsi obtenus, d'épaisseur comprise entre 40 et 120 µm, à l'aide d'un brillancemètre sous un angle de 60°.
Le tableau 19 indique les mesures de brillance des films obtenus à partir de la composition décrite en 19.A et d'un film obtenu à partir d'une formulation identique sans DAT.

Tableau 19

| ‰ de DAT | 0 | 50 |
|---|---|---|
| Brillance à 60° | 99,5% | 70,3% |
| Ecart type | 1,1 | 0,7 |

**Exemple 20 Mélange à sec à base d'hybride polyester époxy blanc/Poudre pour application électrostatique**

A. Composition des revêtements

Un prémélange constitué de 600 parties de résine polyester carboxylique d'indice d'acide égal à 35, telle que

par exemple l'URALAC® P3560 de DSM, de 400 parties pour mille de résine époxy (DGEBA) de poids équivalent d'époxy égale à 895 g (EEW) telle que EPIKOTE® 1004 de SHELL, de 350 parties de dioxyde de titane, de 5 parties de benzoine, de 6 parties d'agent d'étalement est réalisé dans un disperseur Henschel®.

L'ensemble homogénéisé est alors introduit dans une extrudeuse à une température de consigne comprise entre 90 et 120°C et avec un temps de séjour matière de l'ordre de 40 s. En sortie d'extrudeuse, le produit ainsi obtenu est refroidi puis broyé pour atteindre une granulométrie inférieure à 100 µm et de diamètre moyen égal à 30 µm(polyester/époxy blanc 20).

Dans un mélangeur rapide de type Henschel®, on charge 1 kg de polyester/époxy blanc 20 et 50 ‰ de DAT. On brasse le mélange 100 s à une vitesse de 1800 tours/minutes.

B. Application:

La poudre obtenue en A est déposée à température ambiante par projection électrostatique sur des plaques d'acier qui ont préalablement subi un dégraissage suivi d'un traitement de surface mécanique (grenaillage). Les plaques revêtues passent ensuite dans un four ventilé de vitesse d'air comprise entre 1 et 5 m/smaintenu à 200°C où elles séjournent 10 min puis sont retirées du four et refroidies librement à l'air.

C. Evaluation:

Les films ansi obtenus, d'épaisseur comprise entre 40 et 120 µm, sont analysés par un brillance-mètre sous un angle de 60°.

Le tableau 20 indique les mesures de brillance d'un film obtenu à partir des formulations de l'exemple 20.A et d'un film obtenu à partir d'une formulation identique sans DAT.

Tableau 20

| | Poudre sans additif | Poudre Ex.20 |
|---|---|---|
| Brillance à 60° | 93,8% | 40,9% |
| Ecart type | 1,1 | 0,3 |

**Exemple 21 Mélange à sec à base de polyester TGIC blanc/Poudre pour application électrostatique**

A. Composition des revêtements

Un prémélange constitué de 1000 parties de résine polyester carboxylique d'indice d'acide égal à 35, de 67 parties d'agent réticulant triglycidyle isocyanurate (TGIC), de 350 parties de dioxyde de titane, de 5 parties de benzoine, de 6 parties d'agent d'étalement est réalisé dans un Henschel®.

L'ensemble homogénéisé est alors introduit dans une extrudeuse à une température de consigne comprise entre 90 et 120°C et avec un temps de séjour matière de l'ordre de 40 s. A la sortie de l'extrudeuse, le produit ainsi obtenu est refroidi puis broyé pour atteindre une poudre de granulométrie inférieure à 100 µm et de diamètre moyen égal à 30 µm(polyester/TGIC blanc 21).

Dans un mélangeur rapide de type Henschel®, on charge 1 kg de polyester/TGIC blanc 21 et 50 ‰ de DAT. On brasse le mélange 100 s à une vitesse de 1800 tours/min.

B. Application

La poudre obtenue en A est déposée à température ambiante par projection électrostatique sur des plaques d'acier dans des conditions identiques à celles décrites en 20.B.

C. Evaluation:

Les films ansi obtenus, d'épaisseur comprise entre 40 et 120 µm, sont analysés par un brillance-mètre sous un angle de 60°.

Le tableau 21 indique les mesures de brillance d'un film obtenu à partir des formulations de l'exemple 21.A et d'un film obtenu à partir d'une formulation identique sans DAT.

Tableau 21

| | Poudre sans additif | Poudre Ex. 21 |
|---|---|---|
| Brillance à 60° | 96,5% | 45,9% |
| Ecart type | 1,5 | 0,8 |

**Exemple 22 Mélange à sec à base de polyester TGIC blanc/Poudre pour application électrostatique**

A. Composition des revêtements

Dans un mélangeur rapide de type Henschel®, on charge 1 kg de poudre Polyester/TGIC commercialisé par la société COURTAULDS sous la référence INTERPON® D 525 Satin blanc et 50 ‰ de DAT. On brasse le mélange 100 s à une vitesse de 1800 trs/min.

B. Application

La poudre obtenue en A est déposée à température ambiante par projection électrostatique sur des plaques d'acier dans des conditions identiques à celles décrites en 20.B.

C. Evaluation

Les films ainsi obtenus, d'épaisseur comprise entre 40 et 120 µm, sont analysés par un brillance-mètre sous un angle de 60°.
Le tableau 22 indique les mesures de brillance d'un film obtenu à partir des formulations de l'exemple 22.A et d'un film obtenu à partir d'une formulation identique sans DAT.

Tableau 22

| | Poudre sans additif | Poudre Ex. 22 |
|---|---|---|
| Brillance à 60% | 47,8% | 27,5% |
| Ecart type | 0,6 | 0,4 |

**Exemple 23 Mélange à sec à base de polyester TGIC naturel/Poudre pour application électrostatique**

A. Composition des revêtements

Dans un mélangeur rapide de type Henschel®, on charge 1 kg de poudre Polyester/TGIC commercialisée par la société AKZO NOBEL sous la référence Vernis 23 P34NF et 50 ‰ de DAT. On brasse le mélange 100 s à une vitesse de 1800 rs/min.
La poudre obtenue en A est déposée à température ambiante par projection électrostatique sur des plaques d'acier dans des conditions identiques à celles décrites en 20.B.

C. Evaluation:

Les films ansi obtenus, d'épaisseur comprise entre 40 et 120 µm, sont analysés par un brillance-mètre sous un angle de 60°.
Le tableau 23 indique les mesures de brillance d'un film obtenu à partir des formulations de l'exemple 23.A et d'un film obtenu à partir d'une formulation identique sans DAT.

Tableau 23

| | Poudre sans additif | Poudre Ex. 23 |
|---|---|---|
| Brillance à 60° | 100,9% | 47,9% |
| Ecart type | 0,4 | 0,4 |

**Exemple 24 Mélange en extrusion à base de polyester TGIC blanc/Poudre pour application électrostatique**

A. Composition des revêtements

Un prémélange constitué de 1.000 parties de résine polyester carboxylique d'indice d'acide égal à 35, de 67 parties de 1,3,5 triglycidyle isocyanurate (TGIC), de 350 parties de dioxyde de titane, de 60 parties de DAT, de 5 parties de benzoine, de 6 parties d'agent d'étalement est réalisé dans un Henschel®.

L'ensemble homogénéisé est alors introduit dans une extrudeuse à une température de consigne comprise entre 90 et 120°C et avec un temps de séjour matière de l'ordre de 40 s. A la sortie de l'extrudeuse, le produit ainsi obtenu est refroidi puis broyé pour atteindre une poudre de granulométrie inférieure à 100 µm et de diamètre moyen égal à 30 µm.

B. Application:

La poudre obtenue en A est déposée à température ambiante par projection électrostatique sur des plaques d'acier dans des conditions identiques à celles décrites en 20.B.

C. Evaluation:

Les films ansi obtenus, d'épaisseur comprise entre 40 et 120 µm, sont analysés par un brillance-mètre sous un angle de 60°.

Le tableau 24 indique les mesures de brillance d'un film obtenu à partir des formulations de l'exemple 24.A et d'un film obtenu à partir d'une formulation identique sans DAT.

Tableau 24

| | Poudre sans additif | Poudre Ex. 24 |
|---|---|---|
| Brillance à 60° | 96,5% | 15,2% |
| Ecart type | 1,5 | 0,3 |

**Exemple 25 Mélange en extrusion à base de PA-11 noir/Poudres pour application électrostatique (exemple comparant le brillant obtenu avec incorporation ou non de charges minérales)**

A. Composition des revêtements

Un prémélange constitué de 58% en poids de PA-11 naturel, de 39% de charge minérale à base de carbonate de calcium, de 0,5% de noir de carbone, de 2% d'antioxydant et d'agent d'étalement est réalisé dans un disperseur du type Henschel®. L'ensemble homogénéisé est alors introduit dans une extrudeuse à une température de consigne comprise entre 190 et 220°C et avec un temps de séjour matière de l'ordre de 30 s. En sortie d'extrudeuse, le produit ainsi obtenu est refroidi puis broyé pour atteindre une poudre de granulométrie inférieure à 100 µm et de diamètre moyen égal à 30 µm (PA-11 noir 25).

Ces poudres contiennent 30‰ d'agent d'autoapplicabilité décrit dans le brevet EP412.888(résine époxy/sulfonamide).

B. Application

Les poudres obtenues en 25.A sont déposées par projection électrostatique sur une plaque d'acier dans les mêmes conditions que celles décrites en 1.B.

C. Evaluation

On mesure le brillant spéculaire des films ansi obtenus, d'épaisseur comprise entre 80 et 150 μm, à l'aide d'un brillancemètre sous un angle de 60°.

Le tableau 25 indique les mesures de brillance des films obtenus à partir des compositions décrites de l'exemple 25.A et des films obtenus à partir de formulations identiques sans les 29% de charges minérales à base de carbonate de calcium ainsi que pour les films obtenus à partir de la poudre de l'exemple 4.A (formulation identique mais sans les charges et avec DAT).

Tableau 25

| | Poudre sans charge minérale | Poudre Ex. 25 | Poudre Ex. 4 |
|---|---|---|---|
| Brillance à $60^0$ | 71,1% | 40,2% | 1,5% |
| Ecart type | 0,6 | 0,6 | 0,1 |

**Exemple 26 Mélanges à sec à base de PA-11 noir/Poudres pour application électrostatique (utilisation de whiskers minéraux à base de carbure de silicium)**

A.Composition des revêtements

Un prémélange constitué de 910 parties en poids de PA-11 naturel, de 90 parties en poids de charge minérale à base de silice et de carbonate de calcium, de 5 parties en poids de noir de carbone, de 12 parties en poids d'antioxydant est réalisé dans un disperseur du type Henschel®. L'ensemble homogénéisé est alors introduit dans une extrudeuse à une température de consigne comprise entre 190 et 220°C et un temps de séjour matière de l'ordre de 30 s. En sortie d'extrudeuse, le produit ainsi obtenu est refroidi puis broyé pour atteindre une poudre de granulométrie inférieure à 100 μm et de diamètre moyen égal à 30 μm (PA-11 noir).

Dans un mélangeur rapide de type Henschel®, on charge 1,5 kg de poudre PA-11 noir décrit précédemment , 30‰ d'agent d'autoapplicabilité décrit dans le brevet EP412.888(résine époxy/sulfonamide) et 50 parties pour mille de whiskers minéraux à base de carbure de silicium (SiC) de diamètre compris entre 0,7 et 1,2 μm et de rapport de forme compris entre 10 et 25. On brasse le mélange pendant 100 s à la vitesse de 1800 trs/min.

B. Application

Les poudres obtenues en 26.A sont déposées par projection électrostatique sur une plaque d'acier dans les mêmes conditions que celles décrites en 1.B.

C. Evaluation

On mesure le brillant spéculaire des films ansi obtenus, d'épaisseur comprise entre 80 et 150 μm, à l'aide d'un brillancemètre sous un angle de 60°.

Le tableau 26 indique les mesures de brillance des films obtenus à partir des compositions décrites de l'exemple 26.A et des films obtenus à partir de formulations identiques sans DAT.

Tableau 26

| | Poudre sans Whiskers à base de SiC | Poudre Ex. 26 |
|---|---|---|
| Brillance à 60° | 73.5% | 32,2% |

Tableau 26 (suite)

| | Poudre sans Whiskers à base de SiC | Poudre Ex. 26 |
|---|---|---|
| Ecart type | 0.5 | 0,9 |

**Revendications**

**1.** Composition pour le revêtement de substrats d'aspect de surface mat comprenant une ou plusieurs résines thermoplastiques et/ou thermodurcissables choisies parmi

* les polyoléfines telles que PE, PP, leurs copolymères ou alliages
* le PVC
* les polyamides aliphatiques, cycloaliphatiques et/ou aromatiques, tels que les PA-11, PA-12, PA-12,12, PA-6,6, PA-6,12, les élastomères thermoplastiques à base de polyamide, seuls, en mélange et/ou copolymérisés,
* les résines époxydes, époxy/phénoliques,
* les hybrides époxy/phénoliques,
* les résines polyesters,
* les résines acryliques et polyuréthannes,

et au moins un agent matant
se présentant majoritairement sous forme d'aiguilles ou paillettes de longueur moyenne comprise entre 1 et 200 µm et de rapport de forme -i-e rapport longueur/diamètre compris entre 10 et 40 et caractérisé en ce que le ou lesdits agents matants sont choisis parmi l'acide dianilide téréphtalique de formule I

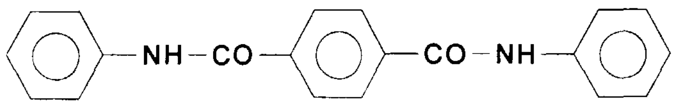

I

et ses dérivés.

**2.** Composition selon la revendication 1, caractérisée en ce qu'elle contient de 1 à 10 % en poids d'agent(s) matant(s) tels que définis à la revendication 1.

**3.** Composition selon la revendication 1 ou 2, caractérisée en ce que le ou les agents matants ont une longueur moyenne comprise entre 50 et 120 µm.

**4.** Composition selon l'une quelconque des revendications 1 à 3, caractérisée en ce que le ou les agents matants ont une longueur moyenne voisine de 100 µm.

**5.** Procédé de fabrication des compositions des revendications 1 à 4 par mélange à sec des différents constituants.

**6.** Procédé de fabrication des compositions des revendications 1 à 4 par mélange à l'état fondu des différents constituants suivi d'un broyage.

**7.** Revêtements de substrats sous forme de films mettant en oeuvre les compositions des revendications 1 à 4.

**8.** Procédé de fabrication de revêtements selon la revendication 7, caractérisé en ce que les compositions sont appliquées sur les substrats par trempage en lit fluidisé.

**9.** Procédé de fabrication de revêtements selon la revendication 7, caractérisé en ce que les compositions sont appliquées sur les substrats par projection électrostatique.

**10.** Matériaux composites d'aspect de surface mat comprenant un substrat et un revêtement de surface sous forme de film tel que défini à la revendication 7.

11. Matériaux composites selon la revendication 10 comprenant un substrat métallique et un revêtement issu d'une composition telle que définie dans les revendications 1 à 4 pour l'ameublement, la décoration et le bâtiment.

**Claims**

1. Composition for the coating of substrates of matt surface appearance, including one or more thermoplastic and/or heat-curable resins chosen from

   - polyolefins such as PE, PP, their copolymers or alloys
   - PVC
   - aliphatic, cycloaliphatic and/or aromatic polyamides such as PA-11, PA-12, PA-12,12, PA-6,6, PA-6,12 and polyamide-based thermoplastic elastomers, by themselves, mixed and/or copolymerized,
   - epoxy and epoxy/phenolic resins,
   - epoxy/phenolic hybrids,
   - polyester resins,
   - acrylic and polyurethane resins,

   and at least one matting agent
   predominantly being in the form of needles or flakes of average length of between 1 and 200 µm and with an aspect ratio, i.e. length/diameter ratio, of between 10 and 40, and characterized in that the said matting agent(s) are chosen from terephthalic acid dianilide of formula I

   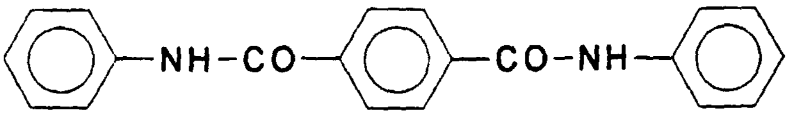

   I

   and its derivatives.

2. Composition according to Claim 1, characterized in that it contains from 1 to 10 % by weight of matting agent(s) as defined in Claim 1.

3. Composition according to Claim 1 or 2, characterized in that the matting agent(s) have an average length of between 50 and 120 µm.

4. Composition according to any one of Claims 1 to 3, characterized in that the matting agent(s) have an average length close to 100 µm.

5. Process for the manufacture of the compositions of Claims 1 to 4 by dry mixing of the various constituents.

6. Process for the manufacture of the compositions of Claims 1 to 4 by mixing of the various constituents in the molten state, followed by grinding.

7. Coatings of substrates in the form of films using the compositions of Claims 1 to 4.

8. Process for the manufacture of coatings according to Claim 7, characterized in that the compositions are applied onto the substrates by dipping in a fluidized bed.

9. Process for the manufacture of coatings according to Claim 7, characterized in that the compositions are applied onto the substrates by electrostatic spraying.

10. Composite materials of matt surface appearance, including a substrate and a surface coating in the form of a film as defined in Claim 7.

11. Composite materials according to Claim 10, including a metal substrate and a coating originating from a composition as defined in Claims 1 to 4 for furniture, decoration and building.

**Patentansprüche**

1. Zusammensetzung für die Beschichtung von Trägern mit einer Schicht mit matt aussehender Oberfläche, wobei die Zusammensetzung ein oder mehrere thermoplastische Harze und/oder warmhärtende Harze, die ausgewählt sind unter

    - Polyolefinen wie PE, PP, ihren Copolymeren und Legierungen
    - PVC,
    - aliphatischen, cycloaliphatischen und/oder aromatischen Polyamiden wie PA-11, PA-12, PA-12, PA-12,12, PA-6,6, PA-6,12, thermoplastischen Elastomeren auf Polyamidbasis, einzeln oder als Gemisch und/oder copolymerisiert,
    - Epoxidharzen, Epoxy/Phenol-Harzen,
    - Epoxy/Phenol-Hybriden,
    - Polyesterharzen,
    - Acryl- und Polyurethanharzen,

    und mindestens ein Mattierungsmittel enthält, das überwiegend in Form von Nadeln oder Plättchen mit einer mittleren Länge von 1 bis 200 µm und einem Formverhältnis, d.h. einem Länge/Durchmesser-Verhältnis, von 10 bis 40 vorliegt,
    dadurch gekennzeichnet, daß
    das oder die Mattierungsmittel unter dem Dianilid der Terephthalsäure der Formel I

    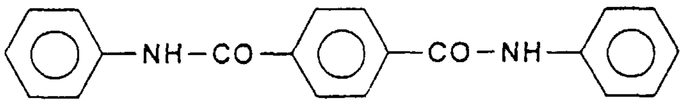

    I

    und seinen Derivaten ausgewählt ist/sind.

2. Zusammensetzung nach Anspruch 1, dadurch gekennzeichnet, daß sie 1 bis 10 Gew.-% eines oder mehrerer Mattierungsmittel enthält, die wie in Anspruch 1 definiert sind.

3. Zusammensetzung nach Anspruch 1 oder 2, dadurch gekennzeichnet, daß das oder die Mattierungsmittel eine mittlere Länge von 50 bis 120 µm aufweisen.

4. Zusammensetzung nach einem der Ansprüche 1 bis 3, dadurch gekennzeichnet, daß das oder die Mattierungsmittel eine mittlere Länge von etwa 100 µm aufweisen.

5. Verfahren zur Herstellung der Zusammensetzungen der Ansprüche 1 bis 4 durch Vermischen der verschiedenen Bestandteile im trockenen Zustand.

6. Verfahren zur Herstellung der Zusammensetzungen der Ansprüche 1 bis 4 durch Vermischen der verschiedenen Bestandteile im geschmolzenen Zustand und sich daran anschließendes Zerkleiner.

7. Schichten auf Trägern in Form von Filmen, für die die Zusammensetzungen nach den Ansprüchen 1 bis 4 verwendet werden.

8. Verfahren zur Herstellung der Schichten nach Anspruch 7, dadurch gekennzeichnet, daß die Zusammensetzungen durch Eintauchen in ein Wirbelbett auf die Träger aufgetragen werden.

9. Verfahren zur Herstellung der Schichten nach Anspruch 7, dadurch gekennzeichnet, daß die Zusammensetzungen durch elektrostatisches Pulverspritzen auf die Träger aufgetragen werden.

10. Verbundmaterialien mit matt aussehender Oberfläche, die einen Träger und auf dessen Oberfläche eine Schicht in Form eines Films umfassen, die wie in Anspruch 7 definiert ist.

**11.** Verbundmaterialien nach Anspruch 10, die einen metallischen Träger und eine Schicht umfassen, die aus einer wie in den Ansprüchen 1 bis 4 definierten Zusammensetzung hervorgegangen ist, für die Möbelindustrie, die Dekoration und die Bauwirtschaft.